**Europäisches Patentamt**

**European Patent Office**

**Office européen des brevets**

(19)

(11) Veröffentlichungsnummer: **0 146 647**
**B1**

(12) **EUROPÄISCHE PATENTSCHRIFT**

(45) Veröffentlichungstag der Patentschrift:
04.11.87

(51) Int. Cl.⁴: **G 01 L 21/24**

(21) Anmeldenummer: **83112728.7**

(22) Anmeldetag: **17.12.83**

(54) **Verfahren zur Messwertverarbeitung bei einem Gasreibungsvakuummeter sowie mit einer Schaltung zur Durchführung dieses Verfahrens ausgerüstetes Gasreibungsvakuummeter.**

(43) Veröffentlichungstag der Anmeldung:
03.07.85 Patentblatt 85/27

(45) Bekanntmachung des Hinweises auf die Patenterteilung:
04.11.87 Patentblatt 87/45

(84) Benannte Vertragsstaaten:
**CH DE FR GB LI**

(56) Entgegenhaltungen:
**DE-A-1 573 603**
**DE-A-2 119 838**

(73) Patentinhaber: **Leybold- Heraeus GmbH, Bonner Strasse 504 Postfach 51 07 60, D-5000 Köln 51 (DE)**

(72) Erfinder: **Schmidt, Lothar, Dr., Bogenstrasse 32, D-5100 Aachen (DE)**

(74) Vertreter: **Leineweber, Jürgen, Dipl.- Phys., Am Heidstamm 78 a, D-5000 Köln 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Verfahren zur Meßwertverarbeitung bei einem Gasreibungsvakuummeter sowie mit einer Schaltung zur Durchführung dieses Verfahrens ausgerüstetes Gasreibungsvakuummeter

Die Erfindung bezieht sich auf ein Verfahren zur Meßwertverarbeitung bei einem Gasreibungsvakuummeter, bei dem der Druckwert über die Abbremsung einer magnetisch frei aufgehängten Kugel bestimmt wird, indem ein erster Zeitwert $t_{n-1}$ durch Messung der Zeit von N/2 Umdrehungsperioden der Kugel und ein zweiter Zeitwert $t_n$ durch unmittelbar anschließende Messung der Zeit von weiteren N/2 Umdrehungsperioden der Kugel gebildet werden, durch Vergleich der beiden Zeitwerte ein Druckwert ermittelt wird, diese Druckwertermittlung aus zwei Zeitwerten nach jeder Umdrehungsperiode für die gleiche Anzahl N Umdrehungsperioden der Kugel Z-mal erneut begonnen wird und der Mittelwert des Z-mal bestimmten Druckwertes angezeigt wird. Außerdem bezieht sich die Erfindung auf ein mit einer Schaltungsanordnung zur Durchführung dieses Verfahrens ausgerüstetes Gasreibungsvakuummeter.

Es ist bekannt, zur Messung eines Gasdruckes die Abbremsung einer magnetisch frei aufgehängten Kugel infolge der Gasreibung zu ermitteln und daraus den Gasdruck zu bestimmen (vgl. Vakuumtechnik, 31. Jahrgang, Heft 6, 1982, Seiten 172 ff.). Bei dem beschriebenen Gerät wird die Kugel auf eine Drehzahl von 400 Hz gebracht, danach der Antrieb abgeschaltet und die Abbremsung der Kugel in Abhängigkeit von der Zeit bestimmt. Im Prinzip wäre es möglich, jeweils die Zeit von zwei unmittelbar aufeinanderfolgenden Kugelumdrehungen zu messen und aus der Zeitdifferenz den Druck zu bestimmen. Ein solches Verfahren wäre jedoch wegen der extrem kleinen Zeitdifferenzen mit hohen Meßunsicherheiten verbunden.

Vorteilhafter ist es, jeweils nacheinander die Zeiten $t_{n-1}$ und $t_n$ zu messen, die die Kugel für eine vorgegebene Anzahl Umdrehungen benötigt, um die Umdrehungszeiten durch Mittelwertbildung genauer bestimmen zu können. Aus den Zeitmessungen läßt sich der Druck p nach der folgenden Formel bestimmen:.

$$p = C \times \frac{t_n - t_{n-1}}{t_n \times t_{n-1}}$$

C ist eine von den physikalischen Eigenschaften der Kugel abhängige, leicht bestimmbare Konstante. $t_{n-1}$ und $t_n$ sind die Zeiten, die die Kugel jeweils für eine vorgegebene Anzahl von Umdrehungen benötigt.

Bei diesem Meßverfahren ergibt sich dann eine ausreichend kleine Meßunsicherheit, wenn die Anzahl der Umdrehungen genügend groß gewählt wird.

Nachteilig an dieser Art der Meßwertverarbeitung ist deshalb, daß es bei kleinen Meßunsicherheiten relativ lange bis zur Anzeige eines Druckwertes dauert, insbesondere dann, wenn zusätzlich mehrere, nacheinander gemessene Druckwerte gemittelt werden sollen. So ergeben sich in der Praxis bei akzeptabler Meßunsicherheit Meßzeiten von bis zu 30 s. Ein in dieser Weise arbeitendes Gerät zeigt deshalb nie den aktuellen Druck an, der in einem zu überwachenden System herrscht.

Desweiteren ist es bekannt, die Zeiten $t_{n-1}$ und $t_n$ jeweils in N/2-Perioden mit einer Periodendauer τ aufzuteilen und mit einer neuen Zeitmessung (die mit einer oder mehreren vorhergehenden gemittelt werden soll) nicht erst den Ablauf der Zeiten $t_{n-1}$ und $t_n$ der vorhergehenden Zeitmessung abzuwarten, sondern jeweils bereits nach einer Periodendauer τ erneut zu beginnen. Der erste Wert einer solchen Messung liegt dann nach einer Gesamtmeßzeit

$$t_m = N \times τ + (Z-1) \times τ$$

vor. Hierbei bedeuten:

N: Gesamtzahl der Perioden τ die zur Bildung der zwei Zeitwerte $t_{n-1}$ und $t_n$ herangezogen werden,

τ: Periodendauer; das ist die Zeit für eine feste Anzahl Umdrehungen der Kugel und

Z: Anzahl der durchgeführten, jeweils nach einer Umdrehungsperiode τ der Kugel neu beginnenden Zeitmessungen zur Bildung eines gemittelten Druckwertes.

Bei dem in der zitierten Literaturstelle beschriebenen Gerät wurde die zuletzt beschriebene Art und Weise der Meßwertverarbeitung realisiert. Als Werte für N und Z wurden 20 und 10 gewählt. Die Anzahl der Umdrehungen der Kugel während einer Umdrehungsperiode τ lag üblicherweise bei 400. Unter diesen Bedingungen konnte der Druck zwar mit geringerem Fehler bestimmt werden. Die Meßzeiten waren aber immer noch relativ lang.

Der vorliegenden Erfindung liegt die Aufgabe zugrunde, ein Verfahren der eingangs genannten Art zu schaffen, bei dem sichergestellt ist, daß bei einer fest vorgegebenen Meßzeit mit minimaler Meßunsicherheit gemessen wird, bzw. bei dem ein Druckwert bei vorgegebener Meßunsicherheit in optimal kurzer Meßzeit bestimmt werden kann.

Erfindungsgemäß wird diese Aufgabe bei einem Meßverfahren der eingangs genannten Art dadurch gelöst, daß sich N zu Z wie 3 zu 1, 4 zu 1 oder 5 zu 1, vorzugsweise wie 4 zu 1, verhält. Diese Erfindung beruht auf der Erkenntnis, daß die Kurve, die die Meßunsicherheit - in Abhängigkeit von $\frac{N}{N+Z}$ darstellt - ein Minimum aufweist, wenn sich N zu Z wie 4 zu 1 verhält. Die Anwendung dieser Lehre ergibt im Vergleich mit dem Stand der Technik den Vorteil, daß bei fest vorgegebenen Meßzeiten Druckbestimmungen mit wesentlich geringeren Meßunsicherheiten möglich sind der - umgekehrt - Druckermittlungen mit fest vorgegebener Meßunsicherheit wesentlich schneller durchgeführt werden können.

Diese Vorteile können insbesondere dann erreicht werden, wenn der Wert für die Periodendauer $\tau$ möglichst klein gewählt wird. $\tau$ kann z. B. die Zeit für wenige oder nur eine Umdrehung der Kugel sein. Es besteht aber auch die Möglichkeit, $\tau$ noch kleiner zu wählen, z. B. als Zeitabschnitt für 1/2 oder 1/4 Umdrehung der Kugel. In diesem Fall müssen der Kugel entsprechend viele Pick-up-Spulen zugeordnet sein.

Die Erfindung ist in den Ansprüchen 1 und 3 definiert.

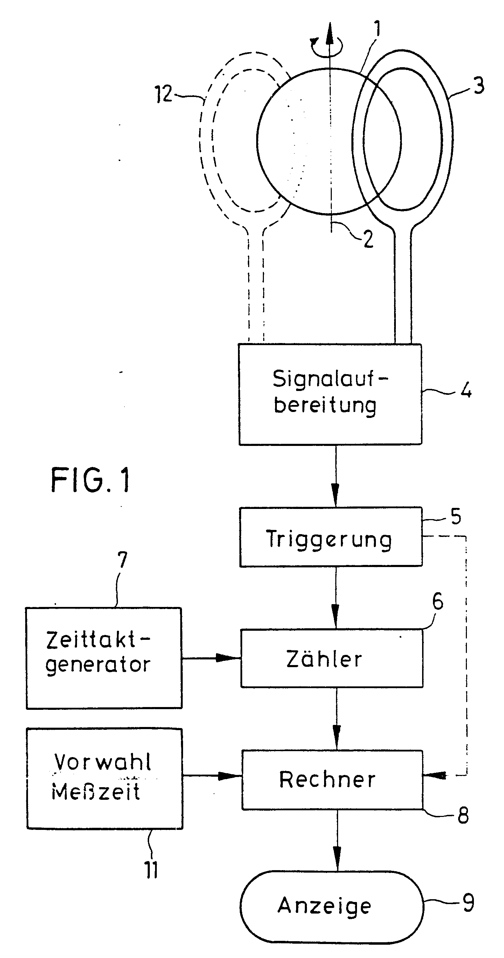

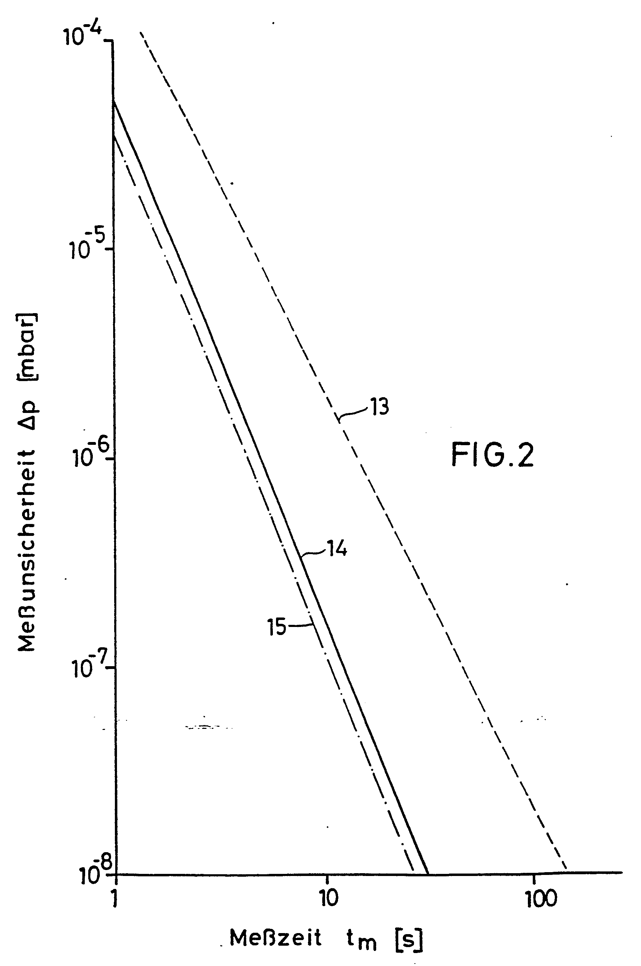

Weitere Vorteile und Einzelheiten der Erfindung sollen anhand der Figuren 1 und 2 erläutert werden.

Fig. 1 ist eine prinzipielle Darstellung, aus der die Signalgewinnung und -verarbeitung bei einem Gasreibungsvakuummeter hervorgeht. Die Kugel 1, die von einem nicht dargestellten Antrieb um die Achse 2 in Drehungen versetzt wird, erzeugt nach dem Abschalten des Antriebs Signale in der Pick-up-Spule 3, die der Signalaufbereitung (Block 4) zugeführt werden. In an sich bekannter Weise werden die Signale danach einer Triggerstufe 5 und einem Zähler 6 zugeführt, der von einem Zeittaktgenerator 7 gesteuert wird. Von der Zählstufe 6 werden die Ergebnisse der Zählungen dem mit der Triggerstufe 5 synchronisierten Rechner 8 zugeführt. Zur Demonstration der Ergebnisse des Rechners 8 ist die Anzeige 9 vorgesehen.

Das erfindungsgemäße Verfahren zur Meßwertverarbeitung kann z. B. folgendermaßen durchgeführt werden: In an sich bekannter Weise erfolgt die Signalverarbeitung mit den Stufen 5, 6 und 7 derart, daß der Zähler 6 die Perioden in den vom Zeittaktgenerator festgelegten Einheiten zählt.

Danach ist die erfindungsgemäße Vorschrift (N: Z = 4 : 1) in den Rechner 8 einzugeben. Hierbei ist von der bereits erwähnten Formel für die Gesamtmeßzeit

$$t_m = N \times \tau + (Z - 1) \times \tau$$

auszugehen. Bezeichnet man M als Summe von N + Z, dann ergibt sich hieraus (bei $t_m > \tau$)

$$M = \frac{t_m}{\tau}$$

bzw.

$$N = \frac{4}{5} M = \frac{4}{5} \frac{t_m}{\tau}$$

$$Z = \frac{1}{5} M = \frac{1}{5} \frac{t_m}{\tau}$$

Dem Rechner 8 ist dann nur noch die Meßzeit selbst vorzugeben, was mit Hilfe der in Fig. 1 dargestellten und dem Rechner 8 zugeordneten Meßzeit-Vorwahl-Stufe 11 geschieht. Alle bei einer solchen Einstellung durchgeführten Druckmessungen erfolgen dann mit einer optimalen Meßgenauigkeit.

Nach einem weiteren Vorschlag der Erfindung soll die Periodendauer $\tau$ möglichst klein sein. Bei nur einer Pick-up-Spule 3 wird $\tau$ zweckmäßigerweise als die Zeit für eine Umdrehung der Kugel gewählt. $\tau$ kann noch kleiner gewählt werden, wenn mehrere Pick-up-Spulen vorhanden sind. Eine weitere Pick-up-Spule ist in der Fig. 1 gestrichelt dargestellt und mit 12 bezeichnet. Zwei in der dargestellten Weise einander gegenüberliegende Pick-up-Spulen ermöglichen, z. B. für $\tau$ die Zeit für eine halbe Kugelumdrehung zu wählen.

Fig. 2 macht die durch die Erfindung erzielten Vorteile in einem Koordinatensystem deutlich. Aufgetragen ist die Meßunsicherheit $\Delta p$ gegen die Gesamtmeßzeit $t_m$. Die gestrichelte Kurve 13 entspricht der Meßunsicherheit, die beim Signalverarbeitungsverfahren nach dem eingangs beschriebenen Stand der Technik in Kauf genommen werden mußte. Die durchgehende Linie 14 entspricht der Meßunsicherheit, die mit dem erfindungsgemäßen Verfahren erzielt werden kann, und zwar bei einem $\tau$ das einer Kugelumdrehung entspricht. Eine weitere Verbesserung der Meßunsicherheit läßt sich durch die Wahl eines noch kleineren $\tau$ erreichen. Die strichpunktierte Linie 15 zeigt die Meßunsicherheit, wenn den Zeitmessungen halbe Kugelumdrehungen zugrunde gelegt werden.

Die angegebenen Werte beziehen sich auf eine Stahlkugel von 4,5 mm $\emptyset$, Stickstoff als Meßgas und eine Unsicherheit der Primärzeitmessung von $\Delta t = 3\,\mu s$.

**Patentansprüche**

1. Verfahren zur Meßwertverarbeitung bei einem Gasreibungsvakuummeter, bei dem der Druckwert über die Abbremsung einer magnetisch frei aufgehängten Kugel (1) bestimmt wird, indem ein erster Zeitwert $t_{n-1}$ durch Messung der Zeit von $\frac{N}{2}$ Umdrehungsperioden der Kugel und ein zweiter Zeitwert $t_n$ durch unmittelbar anschließende Messung der Zeit von weiteren $\frac{N}{2}$ Umdrehungsperioden der Kugel gebildet werden, durch Vergleich der beiden Zeitwerte ein Druckwert ermittelt wird, diese Druckwertermittlung aus zwei Zeitwerten nach jeder Umdrehungsperiode für die gleiche Anzahl N Umdrehungsperioden der Kugel Z-mal erneut begonnen wird und der Mittelwert des Z-mal bestimmten Druckwertes angezeigt wird, dadurch gekennzeichnet, daß sich N : Z wie 3 : 1, 4 : 1 oder 5 : 1, vorzugsweise wie 4 : 1, verhält.

2. Verfahren nach Anspruch 1, dadurch gekennzeichnet, daß der Wert für die Periodendauer $\tau$ klein gewählt ist und der Zeit für eine oder Bruchteilen von einer Umdrehung der Kugel (1) entspricht.

3. Vorrichtung zur Durchführung des Verfahrens nach Anspruch 1 oder 2 mit einer magnetisch aufgehängten, in Drehung versetzbaren Kugel (1), einer der Kugel zugeordneten Pickup-Spule (3) und der Verarbeitung der in der Pick-up-Spule induzierten Signale dienenden Schaltungseinrichtungen (4 bis 9), die einen Rechner (8) umfassen, <u>dadurch gekennzeichnet</u>, daß dem Rechner (8) Mittel (5, 6, 7) zugeordnet sind zum Eingeben der Vorschrift, daß sich N:Z wie 3:1, 4:1 oder 5:1, vorzugsweise wie 4:1, verhält, wobei N der Gesamtzeit der Umdrehungsperioden, die zur Bildung der zwei Zeitwerte $t_{n-1}$ und $t_n$ herangezogen werden, und Z der Anzahl der durchgeführten, jeweils nach einer Umdrehungsperiode der Kugel neu beginnenden Zeitmessungen zur Bildung eines gemittelten Druckwertes entspricht, und daß dem Rechner eine Meßzeit-Vorwahl-Stufe (11) zugeordnet ist.

4. Vorrichtung nach Anspruch 3, <u>dadurch gekennzeichnet</u>, daß der Kugel (1) mindestens eine weitere Pick-up-Spule (12) zugeordnet ist.

## Claims

1. A method for processing measured values in a gas friction vacuum meter, in which the preasure value is determined by means of the deceleration of a magnetically freely suspended ball (1), a first time value $t_{n-1}$ being generated by the measurement of the time of N/2 revolution periods of the ball and a second time value t being generated by measurement following directly thereon of the time of further N/2 revolution periods of the ball, a pressure value being determined by comparison of the two time values, this pressure value determination from two time values being begun anew Z-times after each revolution period for the same number N of revolution periods of the ball and the average value of the Z-times determined pressure value being displayed, characterized in that the ratio N: Z is 3 : 1, 4 : 1 or 5 : 1, preferably 4 : 1.

2. A method according to claim 1, characterized in that the value for the period duration $\tau$ is selected to be small and corresponds to the time of one revolution or fragments of a revolution of the ball (1).

3. A device for inplementing the method according to claim 1 or claim 2, comprising a magnetically suspended ball (1), set in rotary motion, a pick-up coil (3) associated with the ball and circuit devices (4 to 9) serving to process of the signals induced in the pick-up coil, said circuit devices (4 to 9) comprising a computer (8), characterized in that means (5, 6, 7) are associated with the computer (8) for inputting the instruction that the ratio N : Z is 3 : 1, 4 . 1 or 5 ; 1, preferably 4 : 1, N corresponding to the total time of the revolution periods which are used to generate the two time values $t_{n-1}$ and $t_n$ and Z corresponding to the number of time measurements carried out and beginning anew after each revolution period of the ball for the generation of an average pressure value, and in that a measured time preselection stage (11) is associated with the computer.

4. A device according to claim 3, characterized in that at least one other pick-up coil (12) is associated with the ball (1).

## Revendications

1. Procédé de traitement des valeurs mesurées avec un vacuomètre à frottement de gaz, dans lequel on détermine la valeur de la pression en fonction du freinage d'une sphère (1) en suspension magnétique libre, en formant une première valeur du temps $t_{n-1}$ en mesurant la durée de $\frac{N}{2}$ périodes de rotation de la sphère et une seconde valeur du temps $t_n$ en mesurant immediatement ensuite la durée de $\frac{N}{2}$ autres périodes de rotation de la sphère, en établissant par comparaison des deux valeurs du temps une valeur de la pression, en recommençant à établir Z fois la valeur de la pression à partir de deux valeurs du temps après chaque période de rotation pour le même nombre N de périodes de rotation de la sphère et en affaiachant la valeur moyenne de la valeur de la pression déterminée Z fois,

caractérisé en ce que N : Z est égal à 3 : 1, 4 : 1 ou 5 : 1, de préférence 4 : 1.

2. Procédé selon la revendication 1, caractérisé en ce que l'on choisit petite la valeur de la durée de la période de rotation $\tau$ et en ce que cette valeur correspond à la durée d'une rotation complète de la sphère (1) ou d'une fraction de cette rotation complète.

3. Dispositif pour l'exécution du procédé selon la revendication 1 ou 2, comportant une sphère (1) en suspension magnétique et mise en rotation, une bobine de détection (3) correspondant à la sphère et des installations de circuit (4 à 9) qui servent au traitement des signaux induits dans la bobine de détection et comportent un ordinateur (8), caractérisé en ce qu'au calculateur (8) correspondent des moyens (5, 6, 7) pour entrer la valeur prescrite ; en ce que N : Z est egal à 3 : 1, 4 : 1 ou 5 : 1, de préférence 4: 1, étant précisé que N correspond au nombre total des périodes de rotation de la sphère dont on se sert pour former les deux valeurs du temps $t_{n-1}$ et $t_n$ et que Z correspond au nombre de mesures de durée effectuées, commençant chaque fois après une période de rotation de la sphère, pour former une valeur moyenne de la pression ; et en ce qu'à l'ordinateur correspondune étape (11) de présélection de la durée de la mesure.

4. Dispositif selon la revendication 3, caractérisé en ce qu'à la sphère (1) correspond au moins une autre bobine de détection (12).

FIG. 1

FIG.2